# EUROPÄISCHE PATENTSCHRIFT

(11) **EP 3 469 222 B1**
(45) Veröffentlichungstag und Bekanntmachung des Hinweises auf die Patenterteilung: **19.08.2020**
(21) Anmeldenummer: 17731809.4
(22) Anmeldetag: 11.05.2017
(51) Int. Cl.: F16C 13/00, B65H 23/025, F16C 3/02, F16C 19/54, F16C 23/08

(54) **WALZENVORRICHTUNG**
ROLLS ASSEMBLY
ENSEMBLE À ROULEAUX

(30) Priorität: 14.06.2016 DE 102016210565
(43) Veröffentlichungstag der Anmeldung: 17.04.2019
(73) Patentinhaber: MWN In Niefern Maschinenfabrik GmbH, 75223 Niefern-Öschelbronn (DE)
(72) Erfinder: WALZ, Andreas, 75245 Neulingen (DE); LINDÖRFER, Wolfgang, 76199 Karlsruhe (DE)
(74) Vertreter: Patentanwälte Ruff, Wilhelm, Beier, Dauster & Partner mbB
(86) Internationale Anmeldenummer: PCT/EP2017/061402
(87) Internationale Veröffentlichungsnummer: WO 2017/215853

(56) Entgegenhaltungen:
- DE-A1- 2 519 954
- FR-A5- 2 190 205
- US-A- 3 344 493

## Beschreibung

### Anwendungsgebiet und Stand der Technik

Die Erfindung betrifft eine Walzenvorrichtung mit einem hohlen rotierenden Walzenrohr, die insbesondere als sogenannte Breitstreckwalze in einer Papiermaschine eingesetzt wird.

Walzenvorrichtungen mit einem rotierenden Walzenrohr sind beispielsweise aus der DE 29613795 U1 bekannt, bei denen ein Durchbiegen in einem Mittelbereich nach Möglichkeit vermieden werden soll. Dies dient insbesondere dazu, dass ein Nip bzw. eine Anlage zu einer Gegenwalze gleich bleibt.

Des Weiteren sind Breitstreckwalzen bekannt, die nicht gerade verlaufen sollen, sondern eine Durchbiegung aufweisen, insbesondere eine Durchbiegung hin zu einer von ihnen transportierten flachen Materialbahn. Dadurch wird die Materialbahn nach außen bzw. zu den Seiten hin gezogen und somit geglättet. Dabei kann eine Vielzahl von runden Walzenrohrsegmenten drehbar gelagert sein auf einem Walzenkern, der die gewünschte Bogenform aufweist. Die Verwendung einer Vielzahl von Walzenrohrsegmenten mit jeweils aufwändiger Lagerung jedes einzelnen Walzenrohrsegments wird jedoch als sehr nachteilig angesehen.

Aus der EP 1929164 A1 ist eine weitere Breitstreckwalze bekannt, bei der eine Durchbiegung hin zu einer von ihr transportierten flachen Materialbahn erreicht werden soll.

Aus der DE 25 19 954 A1 ist eine Walzenvorrichtung bekannt mit einem rotierenden Walzenrohr, das an den Enden gelagert ist. Es soll über seine Länge hinweg gebogen sein und während seiner Drehung genau diese Biegung beibehalten. Die Hülse soll dabei in geeigneten Lagern herkömmlicher Bauart gelagert sein. Zu diesem Zweck ist davon auszugehen, dass auf einem inneren Rohr über dessen Länge hinweg Radiallager verteilt sind, auf denen eine Hülse aufliegt bzw. an denen sie abgestützt ist. Das Rohr wird in die krumme Form gebracht, indem seitlich an den Enden angebrachte Arme mit Lagerbuchsen daran verbogen werden. Dadurch wird an diesen Lagerbuchsen ein Drehmoment auf das Rohr gebracht, welches dieses in die gewünschte Form bringt.

Aus der US 3 344 493 A1 ist eine weitere Walzenvorrichtung bekannt mit einem gebogenen Walzenrohr. Dieses Walzenrohr ist allerdings in Längssegmente unterteilt. Mittels einer Lagerung soll das Walzenrohr in eine bestimmte Form gebracht werden durch Aufbringen eines Drehmoments, allerdings wird es nicht verbogen.

Aus der FR 2 190 205 A5 ist eine nochmals weitere Walzenvorrichtung bekannt mit einem hohlen Walzenrohr. Dieses weist über seinen Längsverlauf mehrere Radiallager auf, mit denen es auf einem Walzenkern abgestützt ist.

### Aufgabe und Lösung

Der Erfindung liegt die Aufgabe zugrunde, eine eingangs genannte Walzenvorrichtung zu schaffen, mit der Probleme des Standes der Technik vermieden werden können und es insbesondere möglich ist, eine Walze bzw. ein Walzenrohr, das rotiert und ggf. auch schnell rotiert, entlang einer vorgegebenen Biegelinie gebogen auszugestalten oder zu biegen.

Gelöst wird diese Aufgabe durch eine Walzenvorrichtung mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Es ist vorgesehen, dass die Walzenvorrichtung ein rotierendes hohles Walzenrohr aufweist, wobei sie insbesondere zum Einsatz als Breitstreckwalze in einer Papiermaschine ausgebildet ist. Dieses Walzenrohr ist an seinen Enden drehbeweglich gelagert mittels Lagerenden, die in Drehlagern gelagert sind, wobei das Wellenrohr bevorzugt auf die Lagerenden aufgesteckt sein kann, ggf. mittels eines rohrförmigen Adapterelements. Erfindungsgemäß ist innerhalb des Walzenrohrs bzw. zwischen den Lagerenden keine am Walzenrohr angreifende oder anliegende Unterstützung vorgesehen.

Erfindungsgemäß weist die Walzenvorrichtung ein Zug-/Druckelement auf, das im Folgenden als ZD-Element bezeichnet wird, und welches durch das Walzenrohr verläuft und gegen die Enden des Walzenrohrs kraftbeaufschlagt ist, vorteilhaft mittels der Lagerenden. Das ZD-Element kann also mit den Enden des Walzenrohrs verbunden sein oder gegen diese drücken, vor allem dann, wenn das ZD-Element selbst als Zugelement ausgebildet ist und unter Zug steht. Durch die Kraftbeaufschlagung des ZD-Elements, insbesondere mit Zug um von außen gegen die Enden des Walzenrohrs zu drücken, verbiegt sich das Walzenrohr mit einer Auslenkung quer von seiner Längserstreckung weg. Ähnlich wie ein Bogen mit einer Sehne kann also das Walzenrohr durch das ZD-Element verbogen werden. Durch Veränderung der Kraftbeaufschlagung des Walzenrohrs durch das ZD-Element bzw. durch eine entsprechende Verkürzung oder Verlängerung des ZD-Elements kann die Biegung und somit die Auslenkung des Walzenrohrs beeinflusst bzw. verstellt werden.

Der Vorteil der Erfindung liegt also darin, dass durch Ausüben von Zug oder vorteilhaft Druck auf das Walzenrohr dessen Verbiegung bzw. Auslenkung erreicht wird. Zug auf das Walzenrohr auszuüben bedeutet hier, dass sich das ZD-Element als reines Zugelement zusammenzieht bzw. verkürzt wird und an den Enden des Walzenrohrs zieht. Dabei werden diese Enden in Richtung aufeinander zu gedrückt. Bei einem ausreichend eigenstabilen Walzenrohr wird keine zwischenliegende Abstützung des Walzenrohrs benötigt, die ansonsten eventuell dazu dienen könnte, die Verbiegung bzw. Auslenkung sicherzustellen.

In Ausgestaltung der Erfindung können an jedem Lagerende ein oder zwei Drehlager vorgesehen sein. Bei zwei Drehlagern kann deren Abstand zueinander zwischen 10% und 200% des Durchmessers des Walzenrohrs betragen, vorteilhaft zwischen 20% und 100%. Dadurch wird eine gute Drehlagerung des Walzenrohrs erreicht.

In weiterer Ausgestaltung der Erfindung können Lagerböcke an den Endbereichen der Walzenvorrichtung vorgesehen sein, in denen die vorgenannten Drehlager gelagert bzw. befestigt sind, bevorzugt in einer Drehlageraufnahme. Dabei sind vorteilhaft die Drehlager schwenkbar in den Lagerböcken bzw. in der Drehlageraufnahme gelagert, wobei eine Schwenkachse senkrecht zur Mittellängsachse von Walzenrohr bzw. ZD-Element oder von Lagerbock zu Lagerbock verlaufen kann. So ist es möglich, dass das Walzenrohr bzw. die Lagerenden in den Drehlagern gelagert sind. Bei einer Verbiegung bzw. Auslenkung des Walzenrohrs und somit auch bei aus einer geraden Erstreckung heraus bewegten Lagerenden können die Drehlager mitschwenken. Unter anderem dadurch ist es erfindungsgemäß möglich, was nachfolgend noch näher erläutert wird, dass eine drehmomentfreie Lagerung erreicht wird.

Vorteilhaft ist eine Drehlageraufnahme der Drehlager in einem vorgenannten Lagerbock drehbar um eine Achse angeordnet, die in etwa parallel zum Walzenrohr verläuft. So kann eine Bogenebene des gebogenen Walzenrohrs verdreht werden. Die Verbiegung bzw. Auslenkung des Walzenrohrs wird so zwar nicht verändert, aber durch Verdrehung wird relativ zu einer Durchlaufebene der flachen Materialien eingestellt, wie stark das Walzenrohr in diese Ebene hineindrückt bzw. hineingebogen ist. Wird die Scheitellinie der Verbiegung direkt zu der Ebene hingedreht, wenn also eine Bogenebene senkrecht zu der Durchlaufebene ist, so ist eine maximale Auslenkung gegeben. Wird die Scheitellinie samt dem Walzenrohr um 90° gedreht, so ist die Bogenebene in etwa parallel zur Ebene der Materialbahn und die Biegung des Walzenrohrs bzw. der Walzenvorrichtung wirkt sich überhaupt nicht auf die Materialbahn aus.

In weiterer Ausgestaltung der Erfindung kann ein Getriebe, insbesondere ein Schneckengetriebe, am Lagerbock vorgesehen sein, um die vorgenannte Drehlageraufnahme zu verdrehen. Besonders vorteilhaft ist ein solches Getriebe an jedem Lagerbock vorgesehen, wobei durch eine mechanische Kopplung der Getriebe oder eine elektrische Kopplung von Antrieben für die Getriebe eine gleichmäßige Verdrehung der Drehlageraufnahme und somit auch der Bogenebene des gebogenen Walzenrohrs bewirkt werden kann.

Eine vorgenannte drehmomentfreie Lagerung des Walzenrohrs und/oder der Lagerenden in den Drehlagern weist vorteilhaft kein Drehmoment um eine Achse auf, die senkrecht zur Längserstreckung der Walzenvorrichtung läuft. Dies bedeutet, dass die Verbiegung des Walzenrohrs nicht dadurch bewirkt wird, dass die Lagerenden oder die Enden des Walzenrohrs selbst durch Anlegen eines Drehmoments verbogen werden, also beispielsweise indem die Drehlager in den Lagerböcken fest und unbeweglich angeordnet sind, so dass das Walzenrohr durch entsprechendes Verdrehen der Lagerböcke gegeneinander verbogen bzw. ausgelenkt wird. Dies wäre mechanisch erheblich aufwändiger zu realisieren als ein erfindungsgemäßes Walzenrohr, das durch das ZD-Element in sich verspannt und somit verbogen und ausgelenkt wird ohne Anlegen von Lagerkräften oder Drehmomenten.

In vorteilhafter Ausgestaltung der Erfindung sind druckbeaufschlagbare Axiallager an den Lagerenden vorgesehen, insbesondere in der Nähe von deren freien Enden, bevorzugt noch außerhalb der Drehlager. Die Lagerenden tragen bevorzugt das Walzenrohr, so dass das Walzenrohr nur mit den Lagerenden verbunden sein kann und nicht direkt mit Drehlagern oder Axiallagern. Dazwischen kann noch ein Adapterelement bzw. Adapterrohr vorgesehen sein. So kann ein Walzenrohr anders aufgebaut sein, insbesondere viel dünner, als die sehr stabilen Lagerenden, die vorteilhaft aus Metall bestehen. Die genannten Axiallager können auf Einschnitten und/durch Durchmesserverjüngungen an Endbereichen der Lagerenden angeordnet sein bzw. anliegen oder aufgeschoben sein. Das ZD-Element drückt dann gegen die Axiallager bzw. ist gegenüber diesen kraftbeaufschlagt. So ist eine Drehbarkeit relativ zwischen Walzenrohr und ZD-Element gegeben. Die vom ZD-Element ausgeübte Zugkraft bewirkt dann eben, von den Lagerenden auf das Walzenrohr übertragen, die genannte Verbiegung bzw. Auslenkung des Walzenrohrs. Die Lagerenden sind dabei vorteilhaft so ausgebildet, dass sie sich nicht verformen, lediglich das Walzenrohr verformt bzw. verbiegt sich.

Vorteilhaft kann ein Walzenrohr auf die Lagerenden bzw. zueinander hinweisende Tragabschnitte der Lagerenden passgenau aufgeschoben sein. Zusätzlich oder alternativ kann es mit Stirnenden bzw. Stirnseiten oder Stirnkanten an umlaufende Anschlagabsätze der Lagerenden aufliegen, so dass ein Einbringen von Druckkräften als Kraftbeaufschlagung, die vom ZD-Element verursacht wird, gut und gleichmäßig in das Walzenrohr möglich ist. Besonders vorteilhaft sind die Lagerenden drehfest mit dem Walzenrohr verbunden. Dies kann einerseits über eine Verklebung oder dergleichen erfolgen, alternativ über Verbindungsstifte. Diese können in Längsrichtung des Walzenrohrs verlaufen und in die Stirnseiten bzw. Stirnenden des Walzenrohrs eingebohrt sein. Alternativ können die Verbindungsstifte in radialer Richtung verlaufen, sollten dann aber nach Möglichkeit nicht über die Außenseite des Walzenrohrs überstehen. Um ein Walzenrohr an sich dünn ausbilden zu können, damit es sich gut verbiegen lässt bei jeder Umdrehung, kann ein vorgenanntes Adapterelement vorgesehen sein an den Enden des Walzenrohrs, das in diese Enden eingeschoben ist, vorteilhaft verklebt ist als Befestigung. Es kann aus Metall oder aus dem Material des Walzenrohrs selbst bestehen. Es verstärkt diese Enden, an denen die Kraft als Druckkraft zum Verbiegen des Walzenrohrs eingebracht wird. In diesem Fall wird eine vorgenannte drehfeste Verbindung zwischen den Adapterelementen und den Lagerenden vorgesehen.

In vorteilhafter Ausgestaltung der Erfindung ist das ZD-Element dezentrisch zu einer Mittellängsachse des Walzenrohrs angeordnet. Ein Versatz kann zwischen 1% und 40% des Durchmessers des Walzenrohrs betragen, bevorzugt zwischen 5% und 20%. Dadurch wird sozusagen durch Zugbelastung des ZD-Elements das Walzenrohr automatisch verbogen bzw. ausgelenkt, und zwar in die Richtung weg von der Seite, zu der das ZD-Element näher angeordnet ist. Je größer der Versatz, desto größer das Übersetzungsverhältnis zwischen aufgebrachter Zugkraft, die am ZD-Element wirkt, und der die Verbiegung bzw. Auslenkung des Walzenrohrs bewirkenden Kraft.

Alternativ ist es zwar auch möglich, das ZD-Element entlang der Mittellängsachse des Walzenrohrs verlaufen zu lassen und dann nach Aufbringen einer starken Zugspannung auf das ZD-Element, nachdem sich eine Verbiegung bzw. Auslenkung des Walzenrohrs nicht von allein ergeben wird, diese von außen zu aufzubringen, beispielsweise durch starkes Auslenken des Walzenrohrs durch eine externe Kraft. Diese kann beispielsweise durch Drücken oder Ziehen an einem Mittelbereich des Walzenrohrs erfolgen. Dann sind aber zum einen kleine Verbiegungen bzw. Auslenkungen des Walzenrohrs kaum möglich, zum anderen wird der Aufwand für das externe Aufbringen einer Kraft als störend angesehen.

In vorteilhafter Ausgestaltung der Erfindung verläuft das ZD-Element parallel zu einer Mittellängsachse des Walzenrohrs. So kann eine symmetrische Kraft zur Verbiegung bzw. Auslenkung des Walzenrohrs aufgebracht werden. Alternativ ist es zwar auch möglich, dass das ZD-Element nicht-parallel zur Mittellängsachse verläuft. Dies macht den Vorgang des Verbiegens bzw. Auslenkens des Walzenrohrs aber schwerer handhabbar und könnte die Genauigkeit verschlechtern.

Bevorzugt verläuft das ZD-Element oberhalb der Mittellängsachse des Walzenrohrs, so dass sich dieses nach unten verbiegt bzw. auslenkt. Dies muss aber nicht sein, insbesondere kann ja auch, wie zuvor erläutert worden ist, eine Drehlagerung bzw. Drehlageraufnahme an den Lagerböcken gedreht werden.

In bevorzugter Ausgestaltung der Erfindung wird das ZD-Element ausschließlich als Zugelement zugbelastet. Eine aktive Kraftbeaufschlagung kann vorteilhaft nur an einem Ende des ZD-Elements vorgesehen sein, beispielsweise durch eine Hydraulikvorrichtung. Vorteilhaft wird hier eine manuell betätigbare Hydraulikvorrichtung mit einer Handpumpe vorgesehen, die ausreichende Kräfte erzeugen kann. Auf der anderen Seite kann das ZD-Element axial gegen das Walzenrohr bzw. gegen das Lagerende abgestützt sein. Schließlich kommt es nur auf eine Verkürzung des ZD-Elements bzw. eine Kraftaufbringung durch das ZD-Element an, wie diese erfolgt bzw. an welchen Stellen spielt keine Rolle. Auch eine entsprechende Verkürzung des ZD-Elements an Verbindungsvorrichtungen zwischen dem ZD-Element und einer Abstützung gegen eines der Lagerenden wird als Verkürzung des ZD-Elements angesehen. Der Vorteil einer Verwendung des ZD-Elements als reines Zugelement liegt darin, dass die großen hauptsächlichen Kräfte, die dann die Verbiegung bzw. Auslenkung des Walzenrohrs bewirken, sozusagen innerhalb der Walze verbleiben und nicht von den Lagerböcken oder sonstigen Lagern nach außen hin aufgefangen werden müssen. Lediglich die genannten Axiallager müssen, wenn das ZD-Element mittels Axiallagern gegen das Walzenrohr bzw. gegen die Lagerenden abgestützt ist, sehr stabil sein. Mit solchen Axiallagern ist es dann möglich, dass das ZD-Element statisch an der Walzenvorrichtung angeordnet ist, also nicht rotiert. Das Walzenrohr samt Lagerenden dreht sich relativ zu dem ZD-Element, wobei zu beachten ist, dass sich das Walzenrohr bei jeder vollständigen Umdrehung wegen des Verdrehens gegen das statische ZD-Element und der gleichbleibenden Biegeebene einmal in sich verwindet bzw. durchbiegt. Es entsteht also keine gleichbleibende Verbiegung bzw. Auslenkung des Walzenrohrs. Deswegen ist sehr viel Wert auf die Materialwahl und Verarbeitung des Walzenrohrs zu legen. Hierzu wird nachfolgend noch mehr ausgeführt. Der Vorteil hierbei liegt darin, dass die rotierende Masse geringer ist, weil eben das ZD-Element nicht mitrotieren muss. Des Weiteren wäre dessen Auslegung schwierig angesichts einer wahrscheinlich dezentrischen Anordnung des ZD-Elements.

Alternativ kann das ZD-Element zwar auch an der Walzenvorrichtung rotieren, wozu es beispielsweise fest mit dem Walzenrohr bzw. den Lagerenden verbunden sein kann oder verspannt sein kann. Dann kann auf aufwändige Axiallager zwischen ZD-Element und den Lagerenden verzichtet werden. Anderseits ist dann aber die Platzierung des ZD-Elements sehr bedeutsam hinsichtlich der Frage der entstehenden Rotationskräfte oder Vibrationen, wenn sich die Walzenvorrichtung schnell drehen soll.

In vorteilhafter Ausgestaltung der Erfindung ist ein Antrieb für die Walzenvorrichtung seitlich an einem Endbereich des Walzenrohrs und/oder am Lagerende vorgesehen. Vorteilhaft ist dabei eine Riemenscheibe auf einem Lagerende nahe einer Drehlageraufnahme bzw. eines der vorgenannten Lagerböcke vorgesehen. Eine Riemenscheibe ist vorteilhaft innerhalb der Lagerböcke vorgesehen, so dass diese nach außen keinen Platz benötigen. Ein Antrieb über eine Riemenscheibe ist im Stand der Technik bekannt und bewährt.

Um die vorgenannten Anforderungen bezüglich des hochbelasteten Walzenrohrs zu erfüllen, ist dieses vorteilhaft nicht-metallisch bzw. weist einen Kern oder Innenteil aus Fasermaterial bzw. Faserverbundmaterial auf, besteht also im Inneren aus solchem Material. Die tragende oder stützende Funktion des Walzenrohrs wird also von Fasermaterial bzw. Faserverbundmaterial übernommen. Vorteilhaft besteht es als Rohr im Wesentlichen aus solchem Fasermaterial bzw. Faserverbundmaterial und kann eine funktionale Oberfläche oder Beschichtung aufweisen, die vorteilhaft ebenfalls nicht-metallisch bzw. aus Kunststoff oder Gummi ist. Eine Wandstärke eines solchen Walzenrohrs aus Fasermaterial kann bei einer Länge von etwa 4 Metern beispielsweise bei 4 mm bis 10 mm liegen. Gerade die vorgenannten Breitstreckwalzen sind, weil sie nicht an Gegenwalzen anliegen, nicht allzu sehr kraftbelastet und müssen deswegen keine sehr großen Kräfte aufnehme können. Durch relativ geringe Wandstärken und spezielle Fasermaterialen kann dann auch erreicht werden, dass die Walzenrohre bei der genannten permanenten Verbiegung mit jeder Drehung keine vorzeitigen Materialermüdungen aufzeigen. Des Weiteren ist die benötigte Antriebskraft nicht so groß, da diese ja nicht nur die Walze drehen muss, sondern permanent verbiegen muss.

Ein ZD-Element kann an den Enden Verbindungsmittel aufweisen, insbesondere zur Verbindung mit den Lagerenden. Das ZD-Element kann eine Zugstange sein, die aus Metall oder aus Fasermaterial gefertigt ist. Da das ZD-Element vorteilhaft statisch an der Walzenvorrichtung angeordnet ist und nicht mitgedreht werden muss, also auch nicht beschleunigt werden muss, spielt sein Gewicht keine so entscheidende Rolle. Vielmehr ist von großer Bedeutung, dass es dehnfest ist.

Diese und weitere Merkmale gehen außer aus den Ansprüchen auch aus der Beschreibung und den Zeichnungen hervor, wobei die einzelnen Merkmale jeweils für sich alleine oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischen-Überschriften beschränkt die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine Schnittdarstellung durch eine gesamte Walzenvorrichtung gemäß der Erfindung,
- Fig. 2: eine schematische Darstellung eines durchgebogenen Walzenrohrs der Walzenvorrichtung aus Fig. 1 mit darin verlaufendem Zugelement,
- Fig. 3: eine Vergrößerung des linken Bereichs einer leicht abgewandelten Walzenvorrichtung,
- Fig. 4: eine Schnittdarstellung durch einen Lagerbock ähnlich Fig. 1 mit einer Drehverstellung und
- Fig. 5: einen Teilschnitt durch den Lagerbock aus Fig. 4 mit Schnittebene vertikal zur Zeichenebene.

### Detaillierte Beschreibung der Ausführungsbeispiele

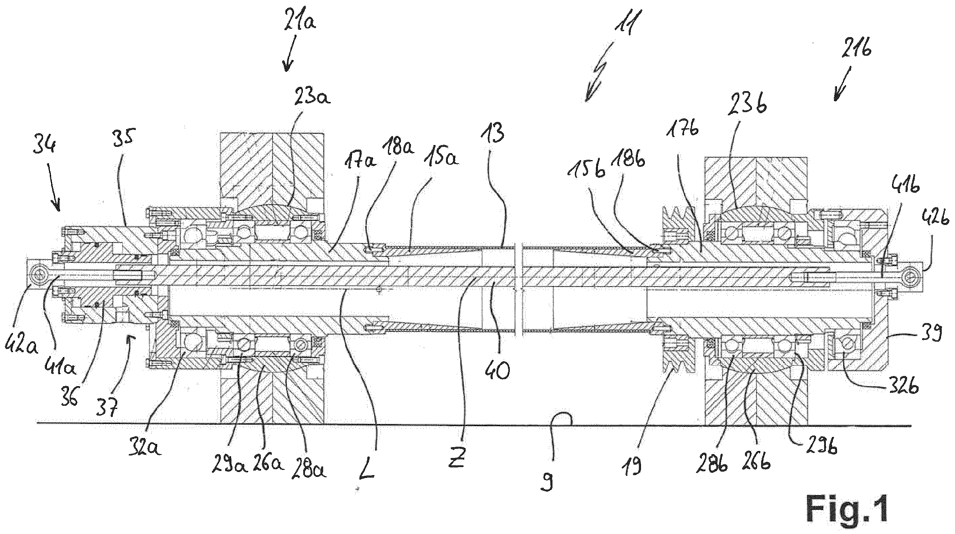

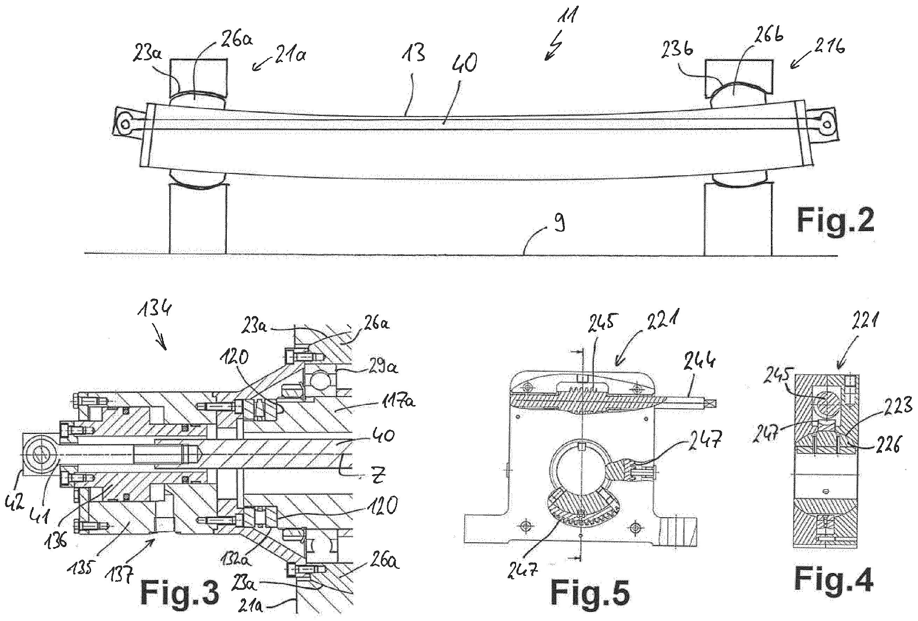

In der Fig. 1 ist eine erfindungsgemäße Walzenvorrichtung 11 dargestellt, die auf einem Boden 9 aufgestellt ist. Die Walzenvorrichtung weist ein Walzenrohr 13 auf, das vorteilhaft aus einem Faserverbundmaterial besteht, insbesondere mit Kohlefasern in einer Matrix aus Harz. Die Kohlefasern sind hier in Form von Rovings zum Walzenrohr 13 gewickelt mit beispielsweise einem Umfangslagenanteil von 15% und einem Längslagenanteil von 85%. Die Wanddicke des Walzenrohrs kann dabei ganz allgemein zwischen 2 mm und 12 mm liegen, die Länge beträgt zwischen 4 m und 5 m. Ein Durchmesser des Walzenrohrs 13 kann zwischen 10 cm und 15 cm liegen. Die Walzenvorrichtung 11 ist als eingangs genannte Breitstreckwalze ausgebildet bzw. das Walzenrohr 13 soll eine Breitstreckwalze bilden und dazu bogenförmig verlaufen. Dies wird nachfolgend noch erläutert, insbesondere anhand der Fig. 2.

In die freien Enden des Walzenrohrs 13 sind Adapterelemente 15a und 15b eingebracht und vorteilhaft eingeklebt. Unter Umständen können diese Adapterelemente schon bei Herstellung des Walzenrohrs 13 eingearbeitet sein bzw. umwickelt werden. Die Adapterelemente 15a und 15b können auch aus Faserverbundmaterial bestehen, alternativ und vorteilhaft aus Metall bzw. Stahl. Sie sind nach innen zu verjüngt. In den dicken äußeren Bereichen ist das Walzenrohr 13 mit den Adapterelementen 15a und 15b auf Lagerenden 17a und 17b aufgesteckt. Zur drehfesten Verbindung können axial verlaufende Stifte 18a und 18b vorgesehen sein. Unter anderem für diese Anbindung der drehfesten Verbindung sind die Adapterelemente 15a und 15b von Vorteil.

Die Lagerenden 17a und 17b sind erkennbar massiv ausgebildet und bestehen aus Stahl. Sie können vorteilhaft identisch ausgebildet sein, dies ist aber nicht zwingend. Auf dem rechten Lagerende 17b ist eine Riemenscheibe 19 drehfest befestigt. Durch einen entsprechenden Riemen und einen Antriebsmotor kann die Walzenvorrichtung 11 bzw. das Walzenrohr 13 gedreht werden.

Die Lagerenden 17a und 17b sind jeweils in Lagerböcken 21a und 21b gelagert. Dazu weisen die zweiteilig ausgebildeten Lagerböcke 21a und 21b nach innen zu eine umlaufende konvexe Lagerfläche 23a und 23b auf. Darin sind jeweils Teilkugelschalen 26a und 26b gelagert. In den Teilkugelschalen 26a und 26b sind mit Abstand zueinander jeweils zwei Drehlager 28a und 28b und 29a und 29b angeordnet. Der Abstand zueinander kann beispielsweise 4 cm bis 10 cm betragen. In den Drehlagern 28a und 28b und 29a und 29b sind die Lagerenden 17a und 17b drehbar gelagert.

Beidseitig etwas entfernt von den äußeren Drehlagern 29a und 29b sind Axiallager 32a und 32b vorgesehen. Diese sind zum Übertragen von Axialkräften auf die Lagerenden 17a und 17b ausgebildet und entsprechend gelagert.

Im linken Bereich der Walzenvorrichtung 11 ist eine Spannvorrichtung 34 vorgesehen, die einen außerhalb des Axiallagers 32a angeordneten Zylinder 35 aufweist mit einem darin bewegbaren Kolben 36. Über einen Hydraulikanschluss 37 kann Hydrauliköl zugeführt werden und den Kolben 36 im Zylinder 35 nach links drücken.

Der Kolben 36 weist eine Längsbohrung auf, durch welche eine in einem länglichen Zugelement 40 eingeschraubte Zugelement-Öse 41a verläuft. Sie ist am Ende mit einem Kopf 42a verbunden, der sozusagen an der nach außen weisenden Stirnseite des Kolbens 36 anliegt. Das Zugelement 40 kann eine Stahlstange sein, alternativ kann es auch aus Faserverbundmaterial bestehen. Es sollte jedenfalls dehnfest sein. Ein Durchmesser kann allgemein zwischen 1 cm und 5 cm liegen.

Hier ist auch zu ersehen, dass eine Längsmittelachse Z des Zugelements 40 nicht entlang einer Längsmittelachse L des Walzenrohrs 13 verläuft, sondern deutlich darüber, also dezentrisch. Der Abstand kann wenige Zentimeter betragen, beispielsweise 2 cm. Das Zugelement Z ist also um 2 cm zur Längsmittelachse L des Walzenrohrs 13 versetzt. Entsprechend ist auch die Spannvorrichtung 34 zur Längsmittelachse L versetzt.

Im rechten Bereich der Walzenvorrichtung 11 ist keine Spannvorrichtung vorgesehen, da sie nicht notwendig ist. Hier ist eine Zugelement-Öse 41b mittels eines Kopfes 42b außen an eine Art Kappe 39 angelegt, die gegen das rechte Axiallager 32b in axialer Richtung gegen das rechte Lagerende 17b drückt.

Aus der Fig. 1 ist ersichtlich, dass die auf dem Boden 9 stehenden Lagerböcke 21a und 21b feststehen. Das Walzenrohr 13 samt den Lagerenden 17a und 17b kann beliebig rotieren um seine Längsmittelachse L. Die Spannvorrichtung 34 und die Kappe 39 sowie das gesamte Zugelement 40 rotieren dabei nicht. Durch die konkaven Lagerflächen 23a und 23b in den Lagerböcken 21a und 21b sowie die darin angeordneten Teilkugelschalen 26a und 26b als Drehlageraufnahmen kann eine Verdrehung innerhalb der Zeichenebene erfolgen.

Wird nun ausgehend von einem exakt geraden Walzenrohr 13 in einem Ausgangszustand der Walzenvorrichtung 11 die Spannvorrichtung 34 betätigt durch Zuführen von Hydrauliköl am Hydraulikanschluss 37 unter entsprechend großem Druck, so wird der Kolben 36 im Zylinder 35 nach links gedrückt. Dabei zieht er die Zugelement-Öse 41a mittels des Kopfes 42a nach links und übt Zug auf das Zugelement 40 aus. Links stützt sich die Spannvorrichtung am linken Lagerende 17a ab. Rechts stützt sich das Zugelement 40 an der Walzenvorrichtung 11 mittels der Kappe 39 und dem Axiallager 32b am rechten Lagerende 17b ab. Bei zunehmendem Zug durch das Zugelement 40, und weil dieses dezentrisch zur Längsmittelachse L des Walzenrohrs 13 angeordnet ist, wird das Walzenrohr 13 nach unten durchgebogen werden bei der relativen Verkürzung des Zugelements 40. Dies liegt eben erkennbar daran, dass das Zugelement 40 mit seiner Längsmittelachse Z oberhalb der Längsmittelachse L des Walzenrohrs 13 verläuft. Abhängig von der aufgebrachten Zugkraft an der Spannvorrichtung 34 und der daraus folgenden Verbiegung des Walzenrohrs 13 nach unten können diese Verbiegung bzw. der entstehende Bogen eingestellt werden. Als vorteilhaft haben sich Verbiegungen bzw. Abweichungen von der Gerade von etwa 20 mm herausgestellt. Wird nun mittels der Riemenscheiben 19 das Walzenrohr 13 im verbogenen Zustand gedreht, so geht diese Biegung immer nach unten. Das Zugelement 40 samt Spannvorrichtung 34 und rechter Kappe 39 sind dabei unbeweglich, lediglich das Walzenrohr 13 mit den Lagerenden 17a und 17b samt den entsprechenden Lagern dreht sich. Dadurch, dass die Kraft bzw. die Zugspannung auf das Walzenrohr 13 durch das innerhalb dessen verlaufende Zugelement 40 aufgebracht werden, stört das Zugelement nicht und benötigt keinen zusätzlichen Platz. Des Weiteren wird keine große Kraft an den Lagerböcken 21a und 21b benötigt zum Verbiegen der Breitstreckwalze. Vor allem durch die Axiallager 32a und 32b ist es dann aber möglich, dass das Zugelement 40 statisch angeordnet ist und das Walzenrohr 13 sich drehen lässt. Dabei wird bei jeder Drehung die Verbiegung nach unten beibehalten, so dass sich bei jeder Drehung des Walzenrohrs 13 eine Verbiegung sozusagen einmal umlaufend in jede Richtung des Walzenrohrs ergibt. Dafür muss das Material des Walzenrohrs 13 ausgelegt sein, insbesondere das Fasermaterial bzw. das Faserverbundmaterial.

Es ist bei dieser Ausführung jedoch nicht notwendig, über die Lagerböcke 21 oder die Lagerenden 17 Drehmomente auf die Walzenvorrichtung 11 bzw. das Walzenrohr 13 aufzubringen, welche zu einer Verbiegung des Walzenrohrs 13 führen könnten. Diese Verbiegung wird quasi durch das Verspannen in sich übernommen. Gerade durch die vorgenannten konvexen Lagerflächen 23a und 23b und die Teilkugelschalen 26a und 26b mit den Drehlagern darin werden solche Drehmomente von den Lagerböcken 21a und 21b ferngehalten. Des Weiteren kann so auch die Aufstellung einer solchen Walzenvorrichtung 11 stark vereinfach werden, da die Lagerböcke 21a und 21b nicht die zum Verbiegen des Walzenrohrs 13 notwendigen Kräfte abstützen müssen.

In der vereinfachten Darstellung der Fig. 2 mit einem nach unten durchgebogenen Walzenrohr 13 ist deutlich, dass das Zugelement 40 natürlich weiterhin gerade verläuft, bei der Durchbiegung des Walzenrohrs 13 jedoch unter Umständen den Innenseiten der Lagerenden gefährlich nahe kommen kann bzw. eine Durchbiegung ganz offensichtlich begrenzt ist. Dabei bleiben die Lagerböcke 21a und 21b in ihrer ursprünglichen Stellung bzw. senkrecht, lediglich die Drehlager in den Teilkugelschalen 26a und 26b innerhalb der konvexen Lagerflächen 23a und 23b haben sich jeweils um eine Achse senkrecht zur Zeichenebene gedreht.

In der geringfügigen Abwandlung der Fig. 3 einer Spannvorrichtung 134 ist der Lagerbock 21a samt konvexer Lagerfläche 23a wie in Fig. 1 ausgebildet. Dies gilt auch für die Teilkugelschale 26a und das Drehlager 29a, in dem ein Lagerende 117a gelagert ist. Dieses Lagerende 117a ist links neben dem Drehlager 29a kürzer ausgebildet als in Fig. 1, und an einen Absatz 120 ist ein Axiallager 132a angedrückt, das hier nicht als Kugellager ausgebildet ist, sondern als Nadellager.

Links davon ist wiederum eine Spannvorrichtung 134 vorgesehen, die im Prinzip ähnlich derjenigen aus Fig. 1 ausgebildet ist. In einem Zylinder 135, der hier nicht rotationssymmetrisch zur Längsmittelachse Z des Zugelements 40 ausgebildet ist, verläuft ein Kolben 136. Zu dessen Bewegung nach links ist ein Hydraulikanschluss 137 vorgesehen. Links an dem Kolben 136 liegt wiederum der Kopf 42a der Zugelement-Öse 41a an, welche in das Zugelement 40 eingeschraubt ist.

In Fig. 4 und 5 ist eine alternative Ausgestaltung eines Lagerbocks 221 dargestellt. Diese dient dazu, die Bogenebene, die gemäß der Fig. 1 und 2 in der Zeichenebene nach unten hin zum Boden 9 weist, um eine Achse zu drehen, die in etwa der Längsmittelachse L des Walzenrohrs 13 entspricht. So kann eine Bogenauslenkung für die Breitstreckwalze sozusagen wieder reduziert werden oder ganz allgemein eingestellt werden.

Der Lagerbock 221 ist wiederum zweiteilig ausgebildet und weist eine konvexe Lagerfläche 223 auf, in der eine Teilkugelschale 226 passgenau sitzt. In dieser Teilkugelschale 226 können wiederum hier nicht dargestellt Drehlager bzw. eine Drehlageraufnahme angeordnet sein. Außen auf der Teilkugelschale 226 ist ein Zahnkranz 247 aufgebracht oder daran befestigt. Wie die Fig. 5 zeigt geht dieser Zahnkranz 247 zumindest teilweise um die Teilkugelschale 226 herum, unter Umständen auch vollständig. Oberhalb davon ist in dem Lagerbock 221 eine Verstellspindel 244 mit einer Schnecke 245 angeordnet. Wie leicht vorstellbar ist, kann durch Drehen an der Verstellspindel 244 die Schnecke 245 gedreht werden, und durch deren Kämmen mit dem Zahnkranz 247 dreht sich dieser und somit auch die Teilkugelschale 226 samt darin angeordneten Drehlagern. Erfolgt dies an beiden Lagerböcken der Walzenvorrichtung aus Fig. 1 gleichsinnig und gleichmäßig, so kann die Bogenebene auf genannte Art und Weise gut verdreht bzw. verstellt werden. Dazu kann auch eine mechanische Kopplung zwischen Verstellspindeln an beiden Lagerböcken vorgesehen sein.

## Patentansprüche

1. Walzenvorrichtung (11) mit einem rotierenden hohlen Walzenrohr (13), insbesondere als Breitstreckwalze in einer Papiermaschine, wobei:
- das Walzenrohr (13) an seinen Enden drehbeweglich gelagert ist mittels Lagerenden (17, 117) und Drehlagern (28, 29), wobei die Lagerenden in Drehlagern gelagert sind,
- die Walzenvorrichtung (11) ein Zug-/Druckelement (40) aufweist, das durch das Walzenrohr (13) verläuft und gegen die Enden des Walzenrohrs kraftbeaufschlagt ist,
- das Walzenrohr (13) durch eine Kraftbeaufschlagung des ZD-Elements (40) verbiegbar ist mit Auslenkung quer von seiner Längserstreckung weg,
wobei:
- innerhalb des Walzenrohrs (13) zwischen den Lagerenden (17, 117) keine am Walzenrohr angreifende oder anliegende Unterstützung vorgesehen ist,
- eine Lagerung des Walzenrohrs (13) und/oder der Lagerenden (17, 117) in den Drehlagern (28, 29) drehmomentfrei ist.

2. Walzenvorrichtung nach Anspruch 1, **dadurch gekennzeichnet, dass** an jedem Lagerende (17, 117) ein oder zwei Drehlager (28, 29), vorzugsweise mit einem Abstand von 50% bis 200% des Durchmessers des Walzenrohrs, vorgesehen sind.

3. Walzenvorrichtung nach Anspruch 1 oder 2, **gekennzeichnet durch** Lagerböcke (21, 221) an den Endbereichen der Walzenvorrichtung (11), in denen die Drehlager (28, 29) gelagert sind, vorzugsweise schwenkbar gelagert sind um eine Schwenkachse senkrecht zur Mittellängsachse von Walzenrohr (13) und/oder ZD-Element (40), wobei insbesondere eine Drehlageraufnahme (23, 26, 223, 226) der Drehlager (28, 29) in einem Lagerbock (21) um eine Achse drehbar angeordnet ist zur Verdrehung einer Bogenebene des gebogenen Walzenrohrs (13), wobei die Achse in etwa parallel zum Walzenrohr verläuft.

4. Walzenvorrichtung nach Anspruch 3, **dadurch gekennzeichnet, dass** ein Getriebe (244, 245, 247), insbesondere ein Schneckengetriebe, zur Verdrehung der Drehlageraufnahme (23, 26, 223, 226) am Lagerbock (21) vorgesehen ist, vorzugsweise ein Schneckengetriebe an jedem Lagerbock.

5. Walzenvorrichtung nach einem der vorhergehenden Ansprüche, **dadurch gekennzeichnet, dass** das Walzenrohr (13) und/oder die Lagerenden (17, 117) in den Drehlagern (28, 29) gelagert sind ohne Drehmoment um eine Achse senkrecht zur Längserstreckung der Walzenvorrichtung (11), vorzugsweise mittels der schwenkbaren Drehlager nach Anspruch 3 oder 4.

6. Walzenvorrichtung nach einem der vorhergehenden Ansprüche, **dadurch gekennzeichnet, dass** druckbeaufschlagbare Axiallager (32, 132) an den Lagerenden (17, 117) vorgesehen sind, insbesondere nahe an deren freien Enden, vorzugsweise auf Einschnitten und/oder Durchmesserverjüngungen (120) an den Endbereichen der Lagerenden, wobei das ZD-Element (40) gegen die Axiallager drückt bzw. kraftbeaufschlagt ist.

7. Walzenvorrichtung nach einem der vorhergehenden Ansprüche, **dadurch gekennzeichnet, dass** das Walzenrohr (13) auf zueinander hin weisende Tragabschnitte der Lagerenden (17, 117) passgenau aufgeschoben ist und/oder mit Stirnenden an umlaufende Anschlagabsätze der Lagerenden aufliegt, und vorzugsweise drehfest mit den Lagerzapfen verbunden ist, insbesondere über in Längsrichtung des Walzenrohrs verlaufende Verbindungsstifte.

8. Walzenvorrichtung nach einem der vorhergehenden Ansprüche, **dadurch gekennzeichnet, dass** das ZD-Element (40) dezentrisch zu einer Mittellängsachse (Z) des Walzenrohrs (13) verläuft, vorzugsweise mit einem Versatz zwischen 1% und 40% des Durchmessers des Walzenrohrs, wobei insbesondere das ZD-Element oberhalb der Mittellängsachse des Walzenrohrs verläuft.

9. Walzenvorrichtung nach einem der vorhergehenden Ansprüche, **dadurch gekennzeichnet, dass** das ZD-Element als Zugelement (40) zugbelastet ist, wobei vorzugsweise eine aktive Kraftbeaufschlagung nur an einem Ende des ZD-Elements vorgesehen ist und das ZD-Element auf der anderen Seite axial gegen das Walzenrohr (13) bzw. das Lagerende (17, 117) abgestützt ist.

10. Walzenvorrichtung nach einem der vorhergehenden Ansprüche, **dadurch gekennzeichnet, dass** für eine Kraftbeaufschlagung des ZD-Elements (40) eine Hydraulikvorrichtung (35, 36, 37, 137) vorgesehen ist, vorzugsweise eine manuell betätigbare Hydraulikvorrichtung.

11. Walzenvorrichtung nach einem der vorhergehenden Ansprüche, **dadurch gekennzeichnet, dass** das ZD-Element (40) mittels Axiallagern (32, 132) gegen das Walzenrohr (13) bzw. gegen die Lagerenden (17, 117) abgestützt ist, vorzugsweise mittels Axiallagern nach Anspruch 6.

12. Walzenvorrichtung nach einem der vorhergehenden Ansprüche, **dadurch gekennzeichnet, dass** das ZD-Element (40) statisch an der Walzenvorrichtung (11) angeordnet ist, insbesondere nicht-rotierend.

13. Walzenvorrichtung nach einem der Ansprüche 1 bis 11, **dadurch gekennzeichnet, dass** das ZD-Element (40) rotierend an der Walzenvorrichtung (11) vorgesehen ist, insbesondere zusammen mit dem Walzenrohr rotierend und dazu fest mit dem Walzenrohr bzw. den Lagerzapfen verbunden bzw. verspannt ist.

14. Walzenvorrichtung nach einem der vorhergehenden Ansprüche, **dadurch gekennzeichnet, dass** das Walzenrohr (13) nicht-metallisch ist bzw. aus Fasermaterial bzw. Faserverbundmaterial besteht, vorzugsweise mit einer Beschichtung darauf.

15. Walzenvorrichtung nach einem der vorhergehenden Ansprüche, **dadurch gekennzeichnet, dass** das ZD-Element (40) eine Zugstange ist mit Verbindungsmitteln (41, 42) an den Enden, vorzugsweise aus Metall oder Fasermaterial, wobei vorzugsweise die Verbindungsmittel gegen die Axiallager (32) nach Anspruch 6 drücken.

## Claims

1. Roll device (11) having a rotating hollow roll tube (13), in particular as a spreader roll in a paper machine, wherein:
- the roll tube (13) at the ends thereof is rotatably mounted by means of bearing ends (17, 117) and rotary bearings (28, 29), wherein the bearing ends are mounted in rotary bearings,
- the roll device (11) has a tension/compression element (40) which runs through the roll tube (13) and is impinged by a force toward the ends of the roll tube,
- the roll tube (13) is capable of being bent by way of an impingement of the TC element (40) with a force, a deflection of said roll tube being transversely away from the longitudinal extent of said roll tube,
wherein
- within the roll tube (13) between the bearing ends (17, 117) no support that engages or bears on the roll tube is provided,
- a bearing of the roll tube (13) and/or the bearing ends (17, 117) in the rotary bearings (28, 29) is torque-free.

2. Roll device according to claim 1, **characterized in that** on each bearing end (17, 117) one or two rotary bearings (28, 29) are provided, preferably at a spacing of 50% to 200% of the diameter of the roll tube.

3. Roll device according to claim 1 or 2, **characterized by** bearing blocks (21, 221) at the end regions of the roll device (11), the rotary bearings (28, 29) being mounted in said bearing blocks, preferably mounted so as to be pivotable about a pivot axis that is perpendicular to the central longitudinal axis of the roll tube (13) and/or the TC element (40), wherein a rotary bearing receptacle (23, 26, 223, 226) of the rotary bearings (28, 29) is in particular disposed in a bearing block (21) so as to be rotatable about an axis in order for a bow plane of the bent roll tube (13) to be rotated out of position, wherein the axis runs approximately parallel with the roll tube.

4. Roll device according to claim 3, **characterized in that** a gearbox (244, 245, 247), in particular a worm gear, preferably one worm gear on each bearing block, is provided so as to rotate the rotary bearing receptacle (23, 26, 223, 226) on the bearing block (21) out of position.

5. Roll device according to any of the preceding claims, **characterized in that** the roll tube (13) and/or the bearing ends (17, 117) is/are mounted, preferably by means of the pivotable rotary bearings according to claim 3 or 4, in the rotary bearings (28, 29) without any torque about an axis that is perpendicular to the longitudinal extent of the roll device (11).

6. Roll device according to any of the preceding claims, **characterized in that** axial bearings (32, 132) that are capable of being impinged with a pressure are provided at the bearing ends (17, 117), in particular close to the free ends of said bearing ends, preferably on cuts and/or diameter tapers (120) at the end regions of the bearing ends, wherein the TC element (40) presses against the axial bearings, or is impinged with a force in relation to said axial bearings, respectively.

7. Roll device according to any of the preceding claims, **characterized in that** the roll tube (13) is push-fitted in an exact fit onto support portions of the bearing ends (17, 117) that point toward one another and/or by way of end sides bears on encircling detent shoulders of the bearing ends, and is preferably connected to the bearing journals in a rotationally fixed manner, in particular by way of connection pins that run in the longitudinal direction of the roll tube.

8. Roll device according to any of the preceding claims, **characterized in that** the TC element (40) runs so as to be decentric to a central longitudinal axis (Z) of the roll tube (13), preferably having an offset between 1% and 40% of the diameter of the roll tube, wherein the TC element runs in particular so as to be above the central longitudinal axis of the roll tube.

9. Roll device according to any of the preceding claims, **characterized in that** the TC element as a tension element (40) is stressed for tension, wherein an active impingement with a force is preferably provided only at one end of the TC element, and the TC element on the other side is axially supported in relation to the roll tube (13), or to the bearing end (17, 117), respectively.

10. Roll device according to any of the preceding claims, **characterized in that** a hydraulic device (35, 36, 37, 137), preferably a manually activatable hydraulic device, is provided for impinging the TC element (40) with a force.

11. Roll device according to any of the preceding claims, **characterized in that** the TC element (40) is supported in relation to the roll tube (13), or in relation to the bearing ends (17, 117), respectively, by means of axial bearings (32, 132), preferably by means of axial bearings according to claim 6.

12. Roll device according to any of the preceding claims, **characterized in that** the TC element (40) is disposed so as to be static, in particular in a non-rotating manner, on the roll device (11).

13. Roll device according to any of the claims 1 to 11, **characterized in that** the TC element (40) is provided so as to rotate on the roll device (11), in particular so as to rotate conjointly with the roll tube, and to this end is fixedly connected to the roll tube, or to the bearing journals, respectively, or is tensioned in relation to the roll tube or to the bearing journals, respectively.

14. Roll device according to any of the preceding claims, **characterized in that** the roll tube (13) is non-metallic, or is composed of a fiber material or a fiber-composite material, respectively, preferably having a coating thereon.

15. Roll device according to any of the preceding claims, **characterized in that** the TC element (40) is a tension bar having connection means (41, 42) at the ends, preferably from metal or a fiber material, wherein the connection means preferably press against the axial bearings (32) according to claim 6.

## Revendications

1. Dispositif à rouleau (11) comprenant un tube de rouleau (13) creux rotatif, en particulier sous forme de rouleau déplisseur dans une machine à papier, dans lequel :
- le tube de rouleau (13) est monté de manière mobile en rotation à ses extrémités au moyen d'extrémités de support (17, 117) et de paliers rotatifs (28, 29), dans lequel les extrémités de support sont montées dans des paliers rotatifs,
- le dispositif à rouleau (11) comprend un élément de traction/compression (40) qui s'étend à travers le tube de rouleau (13) et est sollicité par une force contre les extrémités du tube de rouleau,
- le tube de rouleau (13) peut être cintré par une sollicitation de force de l'élément de traction/compression (40) avec une déviation transversalement à l'écart de son étendue longitudinale,
dans lequel
- aucun support venant en prise avec le tube de rouleau ou s'appliquant contre celui-ci n'est prévu à l'intérieur du tube de rouleau (13) entre les extrémités de support (17, 117),
- un montage du tube de rouleau (13) et/ou des extrémités de support (17, 117) dans les paliers rotatifs (28, 29) est dépourvu de couple.

2. Dispositif à rouleau selon la revendication 1, **caractérisé en ce qu'**à chaque extrémité de support (17, 117) sont prévus un ou deux paliers rotatifs (28, 29), de préférence à une distance de 50% à 200% du diamètre du tube de rouleau.

3. Dispositif à rouleau selon la revendication 1 ou 2, **caractérisé par** des supports de paliers (21, 221) au niveau des régions d'extrémité du dispositif à rouleau (11), dans lesquels les paliers rotatifs (28, 29) sont montés, de préférences sont montés pivotants autour d'un axe de pivotement perpendiculaire à l'axe médian longitudinal du tube de rouleau (13) et/ou de l'élément de traction/compression (40), un logement (23, 26, 223, 226) des paliers rotatifs (28, 29) étant en particulier disposé dans un support de palier (21) de manière rotative autour d'un axe pour la rotation d'un plan de cintrage du tube de rouleau (13) cintré, l'axe s'étendant approximativement parallèlement au tube de rouleau.

4. Dispositif à rouleau selon la revendication 3, **caractérisé en ce qu'**une transmission (244, 245, 247), en particulier une transmission à vis sans fin, est prévue sur le support de palier (21) pour la rotation du logement de palier rotatif (23, 26, 223, 226), de préférence une transmission à vis sans fin sur chaque support de palier.

5. Dispositif à rouleau selon l'une des revendications précédentes, **caractérisé en ce que** le tube de rouleau (13) et/ou les extrémités de support (17, 117) sont montés dans les paliers rotatifs (28, 29) sans couple autour d'un axe perpendiculaire à l'étendue longitudinale du dispositif à rouleau (11), de préférence au moyen des paliers rotatifs pivotants selon la revendication 3 ou 4.

6. Dispositif à rouleau selon l'une des revendications précédentes, **caractérisé en ce que** des paliers axiaux (32, 132) pouvant être soumis à une pression sont prévus aux extrémités de support (17, 117), en particulier près de leurs extrémités libres, de préférence sur des entailles et/ou des réductions de diamètre (120) au niveau des régions d'extrémité des extrémités de support, l'élément de traction/compression (40) pressant contre les paliers axiaux ou étant sollicité par une force contre ceux-ci.

7. Dispositif à rouleau selon l'une des revendications précédentes, **caractérisé en ce que** le tube de rouleau (13) est enfilé de manière précise sur des parties porteuses orientées l'une vers l'autre des extrémités de support (17, 117) et/ou repose par des extrémités frontales sur des épaulements de butée périphériques des extrémités de support, et est de préférence relié de manière solidaire en rotation aux tourillons de palier, en particulier par le biais de goupilles de liaison s'étendant dans la direction longitudinale du tube de rouleau.

8. Dispositif à rouleau selon l'une des revendications précédentes, **caractérisé en ce que** l'élément de traction/compression (40) s'étend de manière décentrée par rapport à un axe médian longitudinal (Z) du tube de rouleau (13), de préférence avec un décalage entre 1% et 40% du diamètre du tube de rouleau, l'élément de traction/compression s'étendant en particulier au-dessus de l'axe médian longitudinal du tube de rouleau.

9. Dispositif à rouleau selon l'une des revendications précédentes, **caractérisé en ce que** l'élément de traction/compression est sollicité en traction en tant qu'élément de traction (40), une sollicitation de force active n'étant prévue de préférence qu'à une extrémité de l'élément de traction/compression et l'élément de traction/compression étant supporté axialement contre le tube de rouleau (13) ou l'extrémité de support (17, 117) sur l'autre côté.

10. Dispositif à rouleau selon l'une des revendications précédentes, **caractérisé en ce qu'**un dispositif hydraulique (35, 36, 37, 137) est prévu pour une sollicitation de force de l'élément de traction/compression (40), de préférence un dispositif hydraulique pouvant être actionné manuellement.

11. Dispositif à rouleau selon l'une des revendications précédentes, **caractérisé en ce que** l'élément de traction/compression (40) est supporté au moyen de paliers axiaux (32, 132) contre le tube de rouleau (13) ou contre les extrémités de support (17, 117), de préférence au moyen de paliers axiaux selon la revendication 6.

12. Dispositif à rouleau selon l'une des revendications précédentes, **caractérisé en ce que** l'élément de traction/compression (40) est disposé statiquement sur le dispositif à rouleau (11), en particulier de manière non rotative.

13. Dispositif à rouleau selon l'une des revendications 1 à 11, **caractérisé en ce que** l'élément de traction/compression (40) est prévu de manière rotative sur le dispositif à rouleau (11), en particulier de manière rotative conjointement avec le tube de rouleau et est à cet effet relié solidement au tube de rouleau ou aux tourillons de palier ou serré fixement avec ceux-ci.

14. Dispositif à rouleau selon l'une des revendications précédentes, **caractérisé en ce que** le tube de rouleau (13) n'est pas métallique ou est constitué de matériau fibreux ou de matériau composite fibreux, de préférence avec un revêtement sur celui-ci.

15. Dispositif à rouleau selon l'une des revendications précédentes, **caractérisé en ce que** l'élément de traction/compression (40) est une tige de traction dotée de moyens de liaison (41, 42) aux extrémités, de préférence en métal ou matériau fibreux, les moyens de liaison pressant de préférence contre les paliers axiaux (32) selon la revendication 6.
